# EUROPÄISCHE PATENTSCHRIFT

(11) **EP 4 029 645 B1**
(45) Veröffentlichungstag und Bekanntmachung des Hinweises auf die Patenterteilung: **11.03.2026**
(21) Anmeldenummer: 22150229.7
(22) Anmeldetag: 04.01.2022
(51) Int. Cl.: B23Q 1/00

(54) **SPANNANORDNUNG**
CLAMPING DEVICE
DISPOSITIF DE SERRAGE

(30) Priorität: 19.01.2021 DE 102021100953
(43) Veröffentlichungstag der Anmeldung: 20.07.2022
(73) Patentinhaber: Lang Technik GmbH, 73271 Holzmaden (DE)
(72) Erfinder: Lang, Günter, 73249 Wernau (DE); Lang, Philipp, 73271 Holzmaden (DE)
(74) Vertreter: Rüger Abel Patentanwälte PartGmbB

(56) Entgegenhaltungen:
- WO-A1-03/039807
- WO-A1-2019/083623
- DE-A1- 102011 086 853
- DE-A1- 102019 116 262
- DE-U1- 202018 105 390
- US-A1- 2020 368 878

## Beschreibung

Die Erfindung betrifft eine Einrichtung zur Aufnahme wenigstens einer Werkstückspanneinrichtung.

Beispielsweise ist aus der DE 101 55 077 B4 eine sogenannte wiederholgenaue Spanneinrichtung bekannt. Diese umfasst einen Spannstock, der Werkstücke beispielsweise zwischen zwei gegeneinander beweglichen Backen klemmend aufnehmen kann und der seinerseits wiederholgenau auf einer Spannplatte zu befestigen ist. Die Spannplatte wird auch als "Bezugsebenenplatte" bezeichnet. Die Spannplatte bzw. Bezugsebenenplatte weist Öffnungen auf, in die Spann- und Positionierbolzen einzusetzen sind, die von der Unterseite der Werkstückspanneinrichtung weg ragen. In der Spannplatte ist eine Festzieheinrichtung angeordnet, mittels derer die Spann- und Positionierbolzen sowohl axial in die Öffnungen gezogen, wie auch gegen die Öffnungswand gedrückt werden, um dort eine präzise Anlage zu finden. Die Bezugsebenenplatte weist drei oder vier Öffnungen auf, um Werkstückspanneinrichtungen mit drei oder vier Positionier- und Spannbolzen aufzunehmen. Die Festziehvorrichtung weist radial zu den Öffnungen bewegliche Schieber auf, die über einen Keilschiebermechanismus mittels einer Schraube betätigbar sind.

Auch die US 5 167 405 offenbart eine Werkstückspanneinrichtung und eine zugehörige Spannplatte mit Schiebern zum Festziehen von Spannbolzen, die von der Unterseite der Werkstückspanneinrichtung nach unten ragen und von Öffnungen der Spannplatte aufgenommen sind. Die Schieber werden durch eine zentrale Exzenterwelle betätigt, die in der Spannplatte angeordnet ist.

Außerdem ist es aus der DE 10 2017 122 112 A1 bekannt, zum Spannen von Werkstücken eine Werkstückspanneinrichtung vorzusehen, deren beiden Spannbacken an gesonderten, voneinander beabstandeten Linearführungen individuell gelagert sind. Eine mittig in einer Lagereinrichtung gefasste Gewindespindel steht mit beiden Spannbacken in Eingriff. Die beiden Linearführungen und die Lagereinrichtung sind wiederum auf einer Spannplatte befestigt, die hier als Grundplatte bezeichnet wird.

Die US 2020/0368878, welche die Basis für den Oberbegriff von Anspruch 1 darstellt, beschreibt eine Nullspanneinrichtung mit insgesamt vier Festzieheinrichtungen. Diese sind untereinander mittels durchgehender drehbarer Wellen gekuppelt, um synchron zu spannen und zu lösen.

Ein Spannsystem, das ebenfalls mittels einer drehbaren Welle betätigt wird ist zudem aus der DE 20 2018 105 390 U1 bekannt. Die Spannplatte weist vier Spannöffnungen mit radial dazu gelagerten Spannschiebern auf, die über eine zentrale Spannschraube betätigt werden. Diese weist einen Gewindeabschnitt mit einem Rechts- und einem Linksgewinde auf, wobei jedes Gewinde einen Spannkeil trägt. Durch Rechts- oder Linksdrehung der Spannschaube werden die Spannkeile aufeinander zu oder voneinander weg bewegt.

Die WO 2019/083623 A1 offenbart eine weitere Ausführungsform einer Spannplatte mit Spannschrauben. Zum Zusammenwirken mit in Spannöffnungen der Spannplatte eingesetzten Spannfüßen sind mittels einer Spannspindel gegenläufig bewegbare Spannkeile vorgesehen. Die Spindel weist dazu ein Rechts- und ein Linksgewinde auf, um gei einer Drehung in einer Richtung die beiden auf dem Gewinde sitzenden Keilelemente gegenläufig zu bewegen.

Ein anderes Konzept verfolgt die DE 10 2019 116 262 A1. Dort ist ein mittels einer Druckschraube axial beweglicher Spannschieber vorgesehen, der mittels einer keilförmigen Nase zwei weitere Schieber quer zu ihm voneinander weg drückt. Die beiden weiteren Schieber wirken dann auf die eigentlichen schräg zu ihnen angeordneten Spannschieber ein. Diese sind zum Festklemmen von Spannfüßen eingerichtet, die in entsprechenden Bohrungen der Spannplatte sitzen.

Eine solche Anordnung ist auch aus der WO 03/039808 A1 bekannt.

Aus der DE 10 2011 086 853 A1 ist ein Feld hydraulisch betätigter Spannplatten bekannt, wobei jede Spannplatte mehrere Spannöffnungen aufweist. Den Spannöffnungen sind Spannschieber zugeordnet, die hydraulisch betätigt sind. Sie bilden somit hydraulische Aktoren, die mit einem Kanalsystem für das Hydraulikfluid verbunden sind. Nachdem alle Spannschieber hydraulisch miteinander koppeln, benötigen auch alle Spannschieber einen Widerstand, an dem sie ihre keilförmige Nase anlegen können. Ein solcher Widerstand wird durch ein sogenanntes Fixierelement, d.h. einen Spannbolzen, gebildet. Zur Sicherstellung der Funktion müssen nicht benötigte Spannöffnungen mit Blindstopfen versehen werden, um die dortigen Spannelemente zu blockieren.

Der vorliegenden Erfindung liegt die Absicht zugrunde, eine Möglichkeit zur variablen Anbringung von Werkstückspanneinrichtungen zu schaffen. Dabei werden wenigstens zwei Spannplatten bereitgestellt, die in fester räumlicher Beziehung zueinander in einer Werkzeugmaschine montierbar sind. Werden dazu bekannte Spannplatten, beispielsweise Bezugsebenenplatten genutzt, weist jede eine eigene Festziehvorrichtung auf.

Es ist Aufgabe der Erfindung, die Handhabung der Einrichtung zur Aufnahme wenigstens einer Werkstückspanneinrichtung zu vereinfachen.

Erfindungsgemäß wird eine Einrichtung nach Anspruch 1 vorgeschlagen. Sie umfasst wenigstens zwei Spannplatten, die jeweils mehrere Öffnungen zur Aufnahme von Spannbolzen von Werkstückspanneinrichtungen aufweisen. Die in den Spannplatten angeordneten Festzieheinrichtungen weisen aneinander gekoppelte Betätigungsstangen oder eine gemeinsame Bestätigungsstange auf. Durch diese Maßnahme können die Festzieheinrichtungen beider Spannplatten von einer Bedienposition her gemeinsam und gleichzeitig betätigt werden. Der besondere Vorzug dieser Maßnahme liegt darin, dass die Werkstückspanneinrichtung bei entsprechender Anordnung der Spannplatten auch spannplattenübergreifend angeordnet werden kann und beim Betätigen der Festziehvorrichtungen beide gleichzeitig arbeiten. Damit kann sichergestellt werden, dass die Werkstückspanneinrichtung präzise am gewünschten Ort festgespannt wird. Dies gilt insbesondere, wenn die Spannbolzen der Werkstückspanneinrichtungen nach dem Prinzip der DE 101 55 077 B4 ausgebildet sind. Beim Spannen werden die entsprechenden Spannbolzen mit einer Spannkraft beaufschlagt, die sowohl eine Axialkomponente umfasst, die den Spannbolzen in die Öffnung hineinzieht sowie eine Radialkomponente, wodurch der Spannbolzen seitlich federnd und sich lokal an eine Stelle der Bohrungswandung anlegt. Indem dieser Vorgang durch gleichzeitige Betätigung der Festziehvorrichtungen für alle Spannbolzen gleichzeitig abläuft, ist sichergestellt, dass die Spannbolzen gleichzeitig gespannt und die Werkstückspanneinrichtung somit in der gewünschten Position positioniert wird. Bei serieller Betätigung der Festziehvorrichtungen könnten sich ansonsten eventuell Fehlpositionierungen ergeben. Jedenfalls aber spart das erfindungsgemäße Konzept Bedienaufwand und mach die Bedienung von mehreren Spannplatten von einer Seite her möglich. Dies ist insbesondere bei der Anbringung der Spannplatten in eingehausten Arbeitsräumen von Werkzeugmaschinen von Vorteil, bei denen der Zugang zu den Spannmitteln eingeschränkt, beispielsweise nur von einer Seite her möglich ist.

Bei einer erfindungsgemäßen Ausführungsform ist die gemeinsame Betätigungsstange oder sind die beiden miteinander direkt oder mithilfe eines Zwischenstücks in Anlage stehenden Betätigungsstangen in den Spannplatten axial beweglich angeordnet. Das Spannen und Lösen der Festziehvorrichtungen erfolgt durch axiale Bewegung der Betätigungsstange(n).

Die aneinander stirnseitig direkt oder unter Zwischenlage eines Zwischenstücks anliegenden und dadurch bewegungsmäßig gekoppelten Betätigungsstangen sind vorzugsweise zueinander fluchtend angeordnet. So wird die Betätigungsbewegung einer Betätigungsstange einer Spannplatte auf die Betätigungsstange einer anderen Spannplatte übertragen.

Jede Spannplatte weist vorzugsweise eine Durchgangsöffnung auf, in der die Betätigungsstange axial beweglich angeordnet ist. Die Durchgangsöffnung ist vorzugsweise parallel zu einer an der Spannplatte ausgebildeten ebenen Oberseite angeordnet. Die Spannbewegung der Betätigungsstange kann somit von einer der Seitenflächen der Spannplatte her in die Betätigungsstange eingeleitet werden.

Vorzugsweise weist die Durchgangsöffnung an ihren beiden Enden eine Verankerungsstruktur auf, die beispielsweise durch ein Innengewinde gebildet ist. Dieses ist dazu geeignet, ein Federmittel aufzunehmen und zu verankern, um die Betätigungsstange in einer Richtung, vorzugsweise in Löserichtung vorzuspannen. An dem anderen Ende der Durchgangsöffnung kann an dem Innengewinde oder der sonstigen Verankerungsstruktur ein Stellmittel beispielsweise in Gestalt einer Schraube vorgesehen sein. Durch Drehen der Schraube kann die Betätigungsstange axial bewegt und somit ein Festziehen oder ein Lösen der Festzieheinrichtung bewirkt werden.

Die Betätigungsstange weist vorzugsweise eine Keilstruktur auf, die mit mindestens einem zu der Festzieheinrichtung gehörigen Schieber in Eingriff steht. Die Keilstruktur kann durch eine an der Betätigungsstange selbst ausgebildete Schrägfläche oder auch durch eine an einem Keil vorgesehene Schrägfläche ausgebildet sein, der an der Betätigungsstange axial unverschiebbar gehalten ist. Die Schrägfläche ist gegen die Längsrichtung der Betätigungsstange geneigt.

Der Schieber steht mit mindestens einem, vorzugsweise zwei Spannschiebern in Eingriff, von denen jeder jeweils einer der Öffnungen zugeordnet und radial zu dieser angeordnet ist. Der Spannschieber ragt in Spannposition in die Öffnung hinein. In Freigabeposition ist er aus der Öffnung zurückgezogen. Vorzugsweise ist ein Federmittel vorgesehen, das den Spannschieber bezüglich der Öffnung radial nach außen vorspannt. Der Schieber und der Spannschieber bilden vorzugsweise ein Untersetzungsgetriebe, d.h. ein Hub des Schiebers wird in einen Hub des Spannschiebers übersetzt, der höchsten so groß ist wie der Hub des Schiebers. Weiter vorzugsweise bilden wenigstens die Betätigungsstange, der Schieber und der Spannschieber ein Untersetzungsgetriebe.

Der Schieber und die Spannschieber sind vorzugsweise in Taschen mit trapezförmigem, rechteckigem oder quadratischem Querschnitt angeordnet, die an einer Flachseite der Spannplatte mit einem oder mehreren Deckeln verschlossen sind. Dies hat nicht nur fertigungstechnische Vorteile, sondern darüber hinaus den Vorzug, dass die Spannplatten mit einer durchgehenden Betätigungsstange versehen werden können, die durch zur Montage in die miteinander fluchtenden Durchgangsöffnungen einschiebbar ist. Das Einschieben der Betätigungsstange wird ermöglicht, indem aus den Festzieheinrichtungen zunächst zumindest die Schieber herausgenommen werden. Nach dem Einschieben der Betätigungsstange können die Schieber wieder in ihre Taschen eingesetzt und durch Anbringen des Deckels darin gesichert werden.

Weitere Einzelheiten vorteilhafter Ausführungsformen der Erfindung ergeben sich aus der Zeichnung, der Beschreibung oder aus Unteransprüchen. Es zeigen:
Figur 1 Eine Werkstückspanneinrichtung und eine zugehörige Spannplatte, in perspektivischer vereinfachter Darstellung,
Figur 2 die Werkstückspanneinrichtung und die Spannplatte, in vertikal geschnittener ausschnittsweiser Darstellung,
Figur 3 zwei Spannplatten der erfindungsgemäßen Einrichtung zur Aufnahme wenigstens einer Werkstückspanneinrichtung,
Figur 4 eine Festzieheinrichtung der Spannplatten nach Figur 3, in schematisierter Darstellung,
Figur 5 eine abgewandelte Ausführungsform einer Festzieheinrichtung für die Spannplatten nach Figur 3,
Figur 6 zwei Spannplatten mit durchgehenden Betätigungsstangen und
Figur 7 eine Festzieheinrichtung der Spannplatten nach Figur 6.

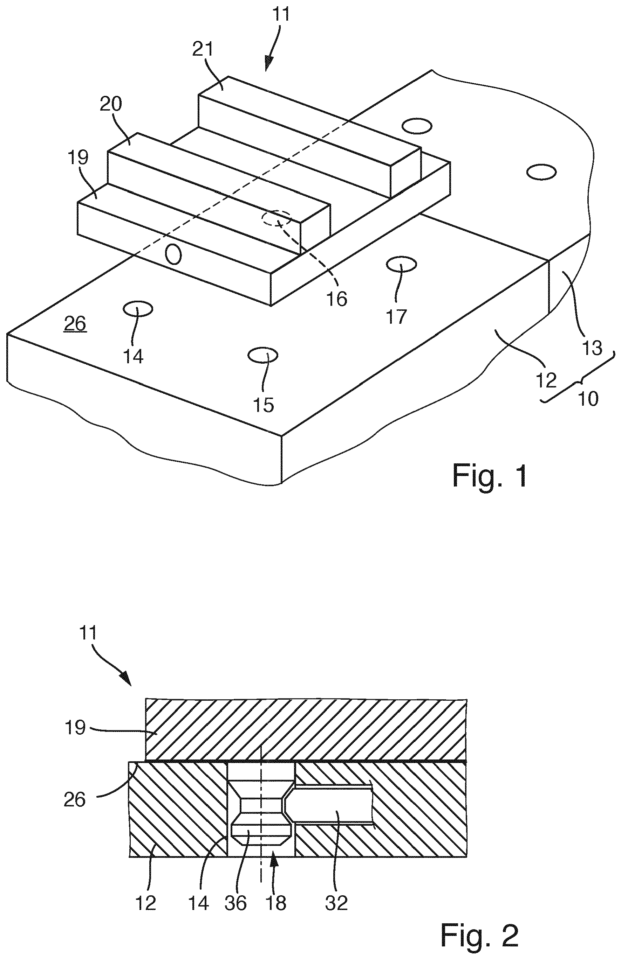

In Figur 1 ist eine Einrichtung 10 zur Aufnahme einer Werkstückspanneinrichtung 11 veranschaulicht. Die Einrichtung 10 umfasst mindestens zwei Spannplatten 12, 13, die zum Beispiel in einer Werkzeugmaschine angeordnet sein können, um die Werkstückspanneinrichtung 11 in vorgegebenen Sollpositionen zu lagern. Die beiden Spannplatten 12, 13 können untereinander im Wesentlichen gleich ausgebildet sein, sodass die nachfolgende Beschreibung der Spannplatte 12 entsprechend für die Spannplatte 13 gilt.

Die Spannplatte 12 weist mehrere beispielsweise vier Öffnungen 14, 15, 16, 17 auf, die zur Aufnahme von Spannbolzen der Werkstückspanneinrichtung 11 dienen. Figur 2 zeigt beispielhaft einen solchen Spannbolzen 18, der in die Öffnung 14 greift. Die Werkstückspanneinrichtung 11 weist einen Führungskörper 19 auf, an dem mindestens ein oder auch zwei Spannbacken 20, 21 beweglich gelagert sind. Von der Unterseite des Führungskörpers 19 ragen mehrere Spannbolzen weg, deren Anordnung mit der Anordnung der Öffnungen 14 bis 17 übereinstimmt.

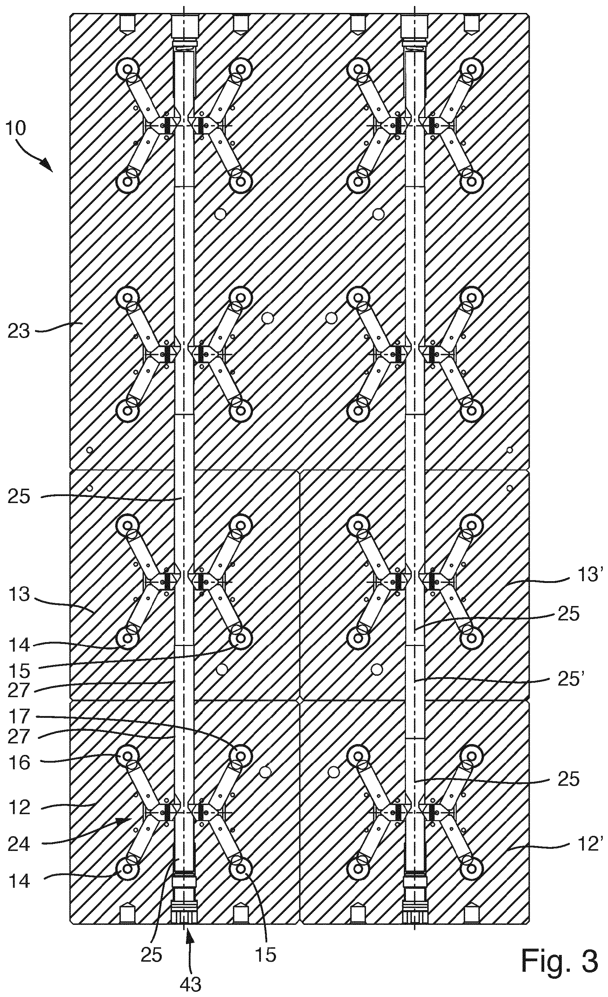

Figur 3 veranschaulicht die Spannplatten 12, 13, sowie zwei weitere seitlich angereihte Spannplatten 12', 13' und eine größere Spannplatte 23. Jede dieser Spannplatten 12, 12', 13, 13', 23 weist jeweils vier Öffnungen 14, 15, 16, 17 zur Aufnahme von Spannbolzen 18 von Werkstückspanneinrichtungen 11 auf, wobei die Öffnungen 14, 15, 16, 17 aller Spannplatten 12, 13, 12', 13' ein gleichmäßiges Raster bilden, wenn die Flanken der benachbarten Spannplatten aneinander liegen. Jeweils vier der Spannöffnungen 14, 15, 16, 17 bilden ein sogenanntes "Nest". Jede der Spannplatten 12, 13, 12', 13' weist genau ein solches Nest auf. Es ist aber auch möglich, Spannplatten mit mehreren solcher Nester zu versehen, wie in Figur 3 oben anhand der Spannplatte 23 veranschaulicht ist.

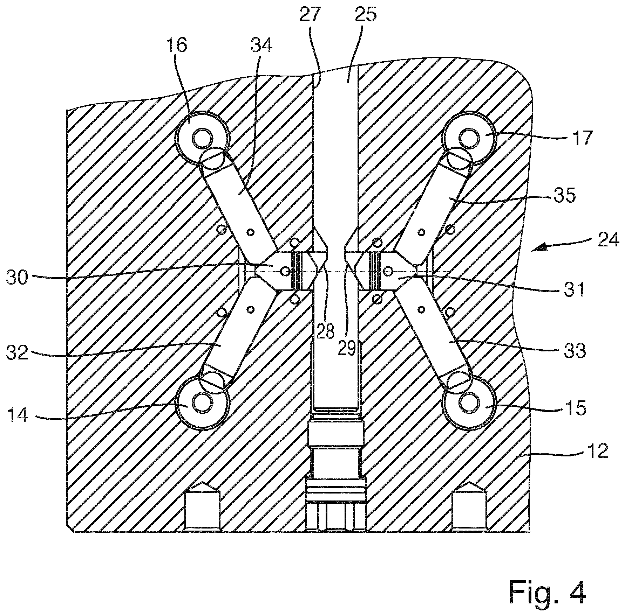

Die Spannplatte 12 weist eine Festzieheinrichtung 24 auf, die dazu dient, in die Öffnungen 14, 15, 16, 17 eingesetzte Spannbolzen 18 festzuziehen. Diese Festzieheinrichtung 24 geht gesondert aus Figur 4 hervor. Die im Zusammenhang damit gegebene Beschreibung gilt für alle Festzieheinrichtungen und Nester aller Spannplatten 12, 13, 12', 13', 23 entsprechend.

Die Festzieheinrichtung 24 umfasst eine Betätigungsstange 25, die axial verschiebbar in einer die Spannplatte 12 parallel zu ihrer Oberseite 26 durchsetzenden Durchgangsbohrung 27 angeordnet ist. Die Betätigungsstange 25 ist beispielsweise ein Rundstab, der zur Betätigung der Festzieheinrichtung zwei einander gegenüberliegende seitliche Ausnehmungen aufweist, die durch Schrägflächen 28, 29 begrenzt sind. Die Schrägflächen 28, 29 bilden miteinander einen Keil, der dazu geeignet ist Schieber 30, 31 auseinander zu drängen, die in quer von der Durchgangsbohrung 27 abzweigenden Kanälen sitzen und mit den Schrägflächen in Anlage stehen. Die Schieber 30, 31 liegen dazu mit entsprechenden Schrägflächen an den Schrägflächen 28, 29 an und sind in ihrem jeweiligen Kanälen quer zu der Betätigungsstange 25 beweglich.

Zu der Festziehvorrichtung gehören außerdem Spannschieber 32 bis 35, die den Öffnungen 14 bis 17 jeweils einzeln zugeordnet sind. Der Spannschieber 32 liegt dabei in einem Kanal, in dem er radial zu der Öffnung 14 so beweglich ist, dass er entweder in die Öffnung 14 ragt oder außerhalb dieser steht. Entsprechendes gilt für die Öffnung 15 und den Spannschieber 33, die Öffnung 16 und den Spannschiebern 34 sowie die Öffnung 17 und den Spannschieber 35. Die Spannschieber 32, und 34 sowie die Spannschieber 33 und 35 sind jeweils paarweise untereinander durch eine Zugfeder verbunden oder durch ein anderes nicht veranschaulichtes Federmittel auf ihre Ruheposition außerhalb der jeweiligen Öffnung 14 bis 17 hin vorgespannt.

Mit ihren von den Öffnungen 14 bis 17 weg liegenden Enden stehen die Spannschieber 32 bis 35 mit einem keilförmigen Ende des jeweiligen Schiebers 30, 31 in Anlage. Dadurch ist ein Schiebergetriebe gebildet, bei dem eine Verschiebung der Betätigungsstange 25 in Figur 4 nach oben die Schieber 30, 31 auseinander drängt, wodurch die Schieber 30, 31 mit ihren keilförmigen außen liegenden Ende wiederum die Spannschieber 32, 34 bzw. 33, 35 auseinander drängen, so dass deren Enden in die Bohrungen 14 bis 17 eindringen. Figur 2 veranschaulicht dies am Beispiel des Schiebers 32, dessen öffnungsseitiges Ende dann in die Öffnung 14 einfährt und dort in eine Nut des Spannbolzens 18 mit Trapezquerschnitt eindringt. Dabei wird durch Zusammenwirken des Endes des Spannschiebers 32 mit einer der Nutflanken der Spannbolzen 18 vertikal in die Öffnung 14 gezogen, wodurch die Grundfläche des Führungskörpers 19 an die Oberseite 26 angezogen wird. Außerdem erfährt der Spannbolzen 18 eine geringe seitliche elastische Verformung, sodass sich sein Kopf 36 an einer dem Spannscheiber 32 gegenüber liegenden Stelle an die Bohrungswandung der Öffnung 14 anlegt. Damit werden die Spannbolzen in den Öffnungen 14 bis 17 voneinander weg gespreizt, wodurch der Führungskörper 19 seine gewünschte Position, d.h. seine Nulllage findet.

Die Bewegung der Betätigungsstange wird durch die Schieber 30, 31 auf die Spannschieber 32 bis 35 übertragen. Dabei bilden die Schieber und Spannschieber ein Untersetzungsgetriebe. Mit anderen Worten, der von jedem Spannschieber 32 bis 35 beim Spannen zurückgelegte Weg ist höchstens so groß, wie der Weg der Betätigungsstange 25, vorzugsweise aber geringer. Dies wird durch entsprechende Schrägstellung der Spannflächen 28, 29 sowie durch entsprechende Einstellung des Keilwinkels an dem voneinander weg weisenden Ende der Schieber 30, 31 erreicht. Vorzugsweise weist jeder Schieber 30, 31 an seinem außen liegenden Ende zwei ebene Keilflächen auf, die in einem rechten oder spitzen Winkel zueinander stehen.

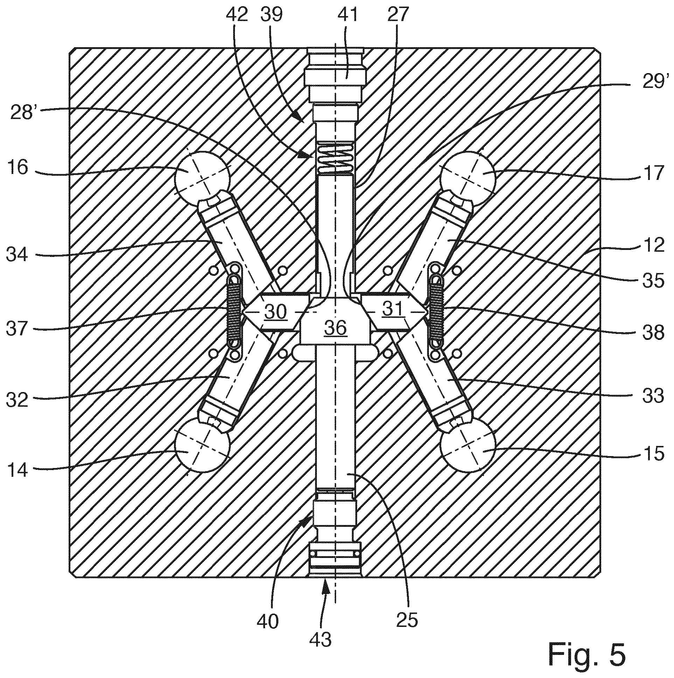

Die Betätigungsstange 25 kann anstelle der beiden Keilflächen 28, 29 auch, wie es in Figur 5 veranschaulicht ist, mit einem Keil 36 versehen sein, der in der Spannplatte 12 axial bezüglich der Betätigungsstange 25 beweglich gelagert ist und der mit der Betätigungsstange 25 in Eingriff steht, um von dieser in Spannrichtung bewegt zu werden. Dazu kann die Betätigungsstange 25 einen durchmesserreduzierten oder abgeflachten Abschnitt aufweisen, den der Keil 36 übergreift. Beispielsweise kann der Keil 36 U-förmig ausgebildet sein, um wie ein Reiter auf der Betätigungsstange 25 zu sitzen. Der Keil 36 weist wiederum Schrägflächen 28', 29' auf, die mit den Schiebern 30, 31 in Anlage stehen. Die vorige zu Figur 4 gegebene Beschreibung gilt entsprechend. Zusätzlich sind in Figur 5 Federmittel veranschaulicht, die beispielsweise als Zugfedern 37, 38 jeweils paarweise die Spannschieber 32, 34 sowie 33, 35 verbinden.

Die zur Aufnahme der Betätigungsstange 25 dienende Durchgangsöffnung 27 weist an zumindest einem Ende, vorzugsweise an beiden Enden, Verankerungsstrukturen, beispielsweise in Gestalt von Innengewinden 39, 40 auf. An der Verankerungsstruktur 37 kann ein Widerlager 41 für eine Druckfeder 42 verankert sein, die dazu dient, die Betätigungsstange 25 in Löserichtung vorzuspannen. An dem entgegengesetzten Ende der Durchgangsöffnung 27 kann eine Betätigungsschraube 43 in die Verankerungsstruktur 38 eingesetzt sein, um die Betätigungsstange 25 gegen die Kraft der Druckfeder 42 in Spannrichtung bewegen zu können. Die Schraube 43 liegt dabei an einer Stirnfläche der Betätigungsstange 25 an, die somit zwischen der Druckfeder 42 und der Betätigungsschraube 43 fixiert ist.

Figur 5 veranschaulicht eine Spannplatte zum Einzelgebrauch. Soll diese jedoch zum Beispiel nach dem Vorbild der Figur 3 in Anreihung mit anderen Spannplatten, beispielsweise der Spannplatte 13, gebraucht werden, wird anstelle einer Betätigungsstange 25, die vollständig in der Spannplatte 12 liegt, nach dem Vorbild der Figur 3 eine Betätigungsstange 25 genutzt, die aus dem der Betätigungsschraube 43 gegenüber liegenden Ende der Durchgangsöffnung 27 herausragt und in die Durchgangsöffnung 27 der benachbarten Spannplatte 13 um genau das Maß eindringt, das sonst von der Spannschraube 43 festgelegt würde. So liegen die Betätigungsstangen 25 der beiden Spannplatten 12, 13 miteinander in fluchtender Anlage. Auf gleiche Weise können auch die Betätigungsstangen der Spannplatte 23 angeschlossen sein.

Am Beispiel der Spannplatten 12', 13' ist in Figur 3 eine Abwandlungsmöglichkeit veranschaulicht. Bei dieser sind die Betätigungsstangen 25 über ein Zwischenstück 25' miteinander verbunden, das die axiale Distanz zwischen den beiden Betätigungsstangen 25 der Spannplatten 12', 13' überbrückt. Werden zum Beispiel Spannplatten nach dem Vorbild der Figur 5 auf diese Weise gekoppelt, werden bei der Spannplatte 13' die Betätigungsschraube 43 und bei der Spannplatte 12' das Widerlager 41 und die Druckfeder 42 entfernt. Der freigewordene Raum wird von dem Zwischenstück 25 eingenommen.

Die insoweit beschriebene Einrichtung 19 arbeitet wie folgt:
Zunächst wird die Betätigungsschraube 43 in Löserichtung bewegt, sodass die Betätigungsstange 25 in Figur 3 nach unten und somit die Schieber 30, 31 aufeinander zu bewegt werden. Die Spannschieber 32 bis 35 (siehe Figur 4) ziehen sich aus den Öffnungen 14 bis 17 zurück. In diesem Zustand kann eine Werkstückspanneinrichtung 11 auf die Einrichtung 10 aufgesetzt werden, sodass ihre Spannbolzen 18 in entsprechende Öffnungen fahren. Es ist dabei möglich, vier Spannbolzen 18 einer einzigen Werkstückspanneinrichtung 11 in die Öffnungen 14 bis 17 einer einzigen Spannplatte, beispielsweise der Spannplatte 12, einzusetzen. Es ist aber auch möglich, die Werkstückspanneinrichtung 11 spannplattenüberreifend zu fixieren, beispielsweise in den beiden in Figur 3 oberen Öffnungen 16, 17 der Spannplatte 12 und den beiden unteren Öffnungen 14, 15 der Spannplatte 13. Auch jede andere Paarung von Öffnungen kann genutzt werden. Ebenso ist es möglich, Werkstückspanneinrichtungen auf die Einrichtung 10 aufzusetzen, die größer ist und somit beispielsweise die Öffnungen 14, 15 der Spannplatte 12 und die Öffnungen 14, 15 der Spannplatte 13 nutzt. Auch weitere Kombinationen sind möglich. Ist die Werkstückspanneinrichtung 11 auf die Einrichtung 10 aufgesetzt, wird die Betätigungsstange 25 durch entsprechende Drehung der Spannschraube 43 in Festziehrichtung bewegt (in Figur 3 nach oben). Dadurch fahren die Spannschieber 32 bis 35 (Figur 4) in die entsprechenden Öffnungen 14 bis 17 ein und spannen die Werkstückspanneinrichtung 12 am Gurt fest. Dabei werden alle von der Betätigungsstange 25 angetriebenen Spannschieber synchron bewegt, sodass die Spannvorgänge in allen Öffnungen gleichzeitig stattfinden. Dies kommt der Positioniergenauigkeit des Spannvorgangs zugute.

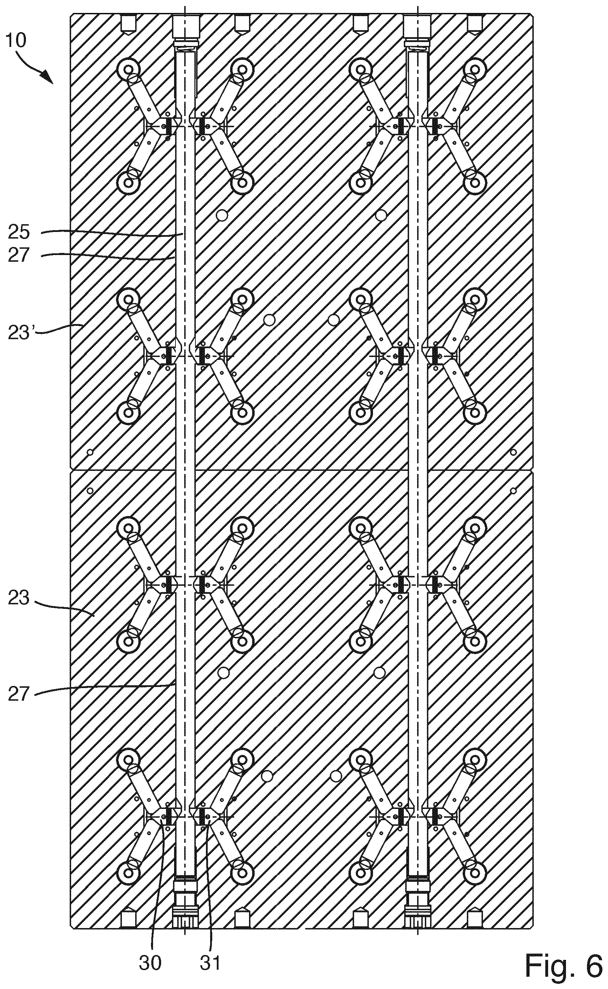

Bei dem vorliegenden Ausführungsbeispiel ist die Betätigungsstange 25 segmentiert. Sie besteht aus den einzelnen Betätigungsstangen der Spannplatten und gegebenenfalls vorhandenen Zwischenstücken 25'. Es ist aber auch möglich, gänzlich durchgängige Betätigungsstangen zu verwenden, wie Figur 6 veranschaulicht. Das Ausführungsbeispiel umfasst zwei Spannplatten 23, 23' mit jeweils vier Nestern. Es ist aber ebenso gut bei Einrichtungen 10 anwendbar, deren Spannplatten 12, 13 lediglich ein Nest oder eine andere Anzahl von Nestern aufweisen.

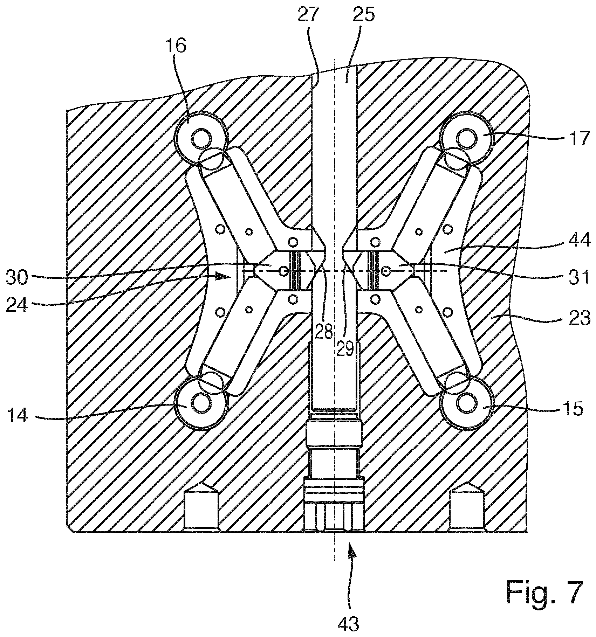

Die durchgehende Betätigungsstange 25 kann in die fluchtenden Durchgangsöffnungen 27 der beiden Spannplatten 23, 23' eingesetzt werden, wenn die Schieber 30, 31 herausgenommen sind. Um dies tun zu können, können diese gemäß Figur 7 in Nuten der Spannplatte 23 angeordnet sein, die zum Beispiel an der Oberseite 26 der betreffenden Spannplatte 23 zugänglich sind und dort durch einen Deckel abgeschlossen sind. Figur 7 veranschaulicht dazu eine an die entsprechenden Nuten anschließende Vertiefung 44, die in Gebrauch einen Deckel aufnimmt, der der Kontur der Vertiefung 44 folgt, und die von diesem verschlossen ist. Ansonsten gilt die Beschreibung der Festzieheinrichtung 24 oder sonstigen Elemente unter Zugrundelegung der bereits eingeführten Bezugszeichen entsprechend.

Eine erfindungsgemäße Einrichtung 10 zur Aufnahme von mindestens einer Werkstückspanneinrichtung 11 weist Spannplatten 12, 13 mit Öffnungen 14 bis 17 zur Aufnahme der an den Werkstückspanneinrichtungen 11 vorgesehenen Spannbolzen 18 auf. In den Spannplatten 12, 13 sind eine oder mehrere Festzieheinrichtungen 24 angeordnet, die von einer Betätigungsstange 25 betätigbar sind. Die Betätigungsstange 25 ist durchgehend oder segmentiert ausgebildet und bedient mehrere Festzieheinrichtungen 24 verschiedener Spannplatten 12, 13 gleichzeitig.

Durch diese Maßnahme können Werkstückspanneinrichtungen 11 Spannplatten übergreifend ebenso genau gespannt werden wie innerhalb einer Spannplatte.

### Bezugszeichen:

- 10: Einrichtung
- 11: Werkstückspanneinrichtung
- 12, 13: Spannplatten
- 14 - 17: Öffnungen
- 18: Spannbolzen
- 19: Führungskörper
- 20, 21: Spannbacken
- 23: Spannplatte
- 24: Festzieheinrichtung
- 25: Betätigungsstange
- 25': Zwischenstück
- 26: Oberseite
- 27: Durchgangsöffnung
- 28, 29: Schrägflächen
- 30, 31: Schieber
- 32 - 35: Spannschieber
- 36: Keil
- 37, 38: Federmittel
- 39, 40: Innengewinde / Verankerungsstruktur
- 41: Widerlager
- 42: Druckfeder
- 43: Betätigungsschraube
- 44: Vertiefung

## Patentansprüche

1. Einrichtung (10) zur Aufnahme wenigstens einer Werkstückspanneinrichtung (11),
mit wenigstens zwei Spannplatten (12, 13, 23), die jeweils mindestens eine Öffnung (14 - 17) zur Aufnahme von Spannbolzen (18) von Werkstückspanneinrichtungen (11) aufweisen,
mit in den Spannplatten (12, 13, 23) angeordneten Festzieheinrichtungen (24), die aneinander gekoppelte Betätigungsstangen (25) oder eine gemeinsame Betätigungsstange (25) aufweisen, **dadurch gekennzeichnet, dass** die wenigstens zwei Spannplatten (12, 13, 23)jeweils mehrere Öffnungen (14 - 17) zur Aufnahme von Spannbolzen (18) aufweisen und dass die gemeinsame Betätigungsstange (25) oder die beiden Betätigungsstangen (25) in den Spannplatten (12, 13, 23) axial beweglich angeordnet sind und miteinander direkt oder mithilfe eines Zwischenstücks in Anlage stehen.

2. Einrichtung nach Anspruch 1, **dadurch gekennzeichnet, dass** die aneinander gekoppelten Betätigungsstangen (25) zueinander axial fluchtend angeordnet sind.

3. Einrichtung nach einem der vorstehenden Ansprüche, **dadurch gekennzeichnet, dass** jede Spannplatte (12, 13, 23) eine Durchgangsöffnung (27) aufweist, in der die Betätigungsstange (25) angeordnet ist.

4. Einrichtung nach Anspruch 3, **dadurch gekennzeichnet, dass** die Durchgangsöffnung (27) parallel zu einer an der Spannplatte (12, 13, 23) ausgebildeten ebenen Oberseite (26) angeordnet ist.

5. Einrichtung nach Anspruch 3, **dadurch gekennzeichnet, dass** die Durchgangsöffnung (27) ihren beiden Enden eine Verankerungsstruktur (37, 38) aufweist.

6. Einrichtung nach Anspruch 5, **dadurch gekennzeichnet, dass** die Verankerungsstruktur (37, 38) ein Innengewinde (39, 40) ist.

7. Einrichtung nach Anspruch 5 oder 6, **dadurch gekennzeichnet, dass** an einem Ende der Durchgangsöffnung (27) ein Federmittel (42) angeordnet und verankert ist.

8. Einrichtung nach Anspruch 5 oder 6 oder 7, **dadurch gekennzeichnet, dass** an einem Ende der Durchgangsöffnung (27) ein Stellmittel (43) angeordnet und verankert ist.

9. Einrichtung nach Anspruch 8, **dadurch gekennzeichnet, dass** das Stellmittel (43) eine Schraube ist.

10. Einrichtung nach einem der vorstehenden Ansprüche, **dadurch gekennzeichnet, dass** die Betätigungsstange (25) eine Keilstruktur (28, 29) aufweist, die mit mindestens einem Schieber (30, 31) in Eingriff steht.

11. Einrichtung nach Anspruch 10, **dadurch gekennzeichnet, dass** der Schieber mit Spannschiebern (32 - 35) in Eingriff steht, von denen jeder jeweils einer der Öffnungen (14 - 17) zugeordnet und radial zu dieser angeordnet ist.

12. Einrichtung nach Anspruch 11, **dadurch gekennzeichnet, dass** die Betätigungsstange (25), der Schieber (30, 31) und der Spannschieber (32 - 35) ein Untersetzungsgetriebe bilden.

13. Einrichtung nach Anspruch 11 oder 12, **dadurch gekennzeichnet, dass** jeder Spannschieber (32 - 35) mit einem Federmittel (37, 38) verbunden ist, das dazu eingerichtet ist, den Schieber bezüglich der Öffnung (14 - 17) radial nach außen vorzuspannen.

14. Einrichtung nach einem der vorstehenden Ansprüche 11-13 **dadurch gekennzeichnet, dass** die Schieber (30, 31) und die Spannschieber (32 - 35) in Nuten angeordnet sind, die an einer Flachseite der Spannplatte (12, 13, 23) mit einem oder mehreren Deckel verschlossen sind.

## Claims

1. A device (10) for receiving at least one workpiece clamping device (11),
comprising at least two clamping plates (12, 13, 23) each having at least one opening (14 - 17) for receiving clamping bolts (18) of workpiece clamping devices (11), comprising tightening devices (24) arranged in the clamping plates (12, 13, 23), which have actuating rods (25) coupled to one another or a common actuating rod (25), **characterized in that** the at least two clamping plates (12, 13, 23) each have a plurality of openings (14 - 17) for receiving clamping bolts (18) and that the common actuating rod (25) or the two actuating rods (25) are arranged in the clamping plates (12, 13, 23) so as to be axially movable and are engaged with each other directly or by means of an intermediate piece.

2. The device according to claim 1, **characterized in that** the actuating rods (25) coupled to one another are arranged in axial alignment with one another.

3. The device according to anyone of the preceding claims, **characterized in that** each clamping plate (12, 13, 23) has a through-opening (27) in which the actuating rod (25) is arranged.

4. The device according to claim 3, **characterized in that** the through-opening (27) is arranged parallel to a flat upper side (26) formed on the clamping plate (12, 13, 23).

5. The device according to claim 3, **characterized in that** the through-opening (27) has an anchoring structure (37, 38) at its both ends.

6. The device according to claim 5, **characterized in that** the anchoring structure (37, 38) is an internal thread (39, 40).

7. The device according to claim 5 or 6, **characterized in that** a spring means (42) is arranged and anchored at one end of the through-opening (27).

8. The device according to claim 5 or 6 or 7, **characterized in that** an actuating means (43) is arranged and anchored at one end of the through-opening (27).

9. The device according to claim 8, **characterized in that** the actuating means (43) is a screw.

10. The device according to anyone of the preceding claims, **characterized in that** the actuating rod (25) comprises a wedge structure (28, 29) which is engaged with at least one slide (30, 31).

11. The device according to claim 10, **characterized in that** the slide engages with clamping slides (32 - 35), each of which is assigned to one of the openings (14 - 17) and arranged radially to the it.

12. The device according to claim 11, **characterized in that** the actuating rod (25), the slide (30, 31) and the clamping slide (32 - 35) form a reduction gear.

13. The device according to claim 11 or 12, **characterized in that** each clamping slide (32 - 35) is connected to a spring means (37, 38) which is arranged to bias the slide radially outwards with respect to the opening (14 - 17).

14. The device according to anyone of the preceding claims 11-13, **characterized in that** the slide (30, 31) and the clamping slides (32 - 35) are arranged in grooves which are closed on a flat side of the clamping plate (12, 13, 23) by one or more covers.

## Revendications

1. Dispositif (10) destiné à accueillir au moins un dispositif de serrage de pièce (11),
comprenant au moins deux plaques de serrage (12, 13, 23) qui présentent chacune au moins une ouverture (14 - 17) destinée à accueillir des goujons de serrage (18) de dispositifs de serrage de pièce (11),
comprenant des dispositifs de de serrage à bloc (24) qui sont installés dans les plaques de serrage (12, 13, 23) et présentent des tiges d'actionnement (25), couplées entre elles, ou une tige d'actionnement (25) commune, **caractérisé en ce que** les plaques de serrage (12, 13, 23), au nombre d'au moins deux, présentent chacune plusieurs ouvertures (14 - 17) aux fins d'accueillir des goujons de serrage (18), et **en ce que** la tige d'actionnement (25) commune ou les deux tiges d'actionnement (25) sont disposées dans les plaques de serrage (12, 13, 23) avec possibilité de déplacement axial et sont en appui réciproque, directement ou à l'aide d'une pièce intercalaire.

2. Dispositif selon la revendication 1, **caractérisé en ce que** les tiges d'actionnement (25) couplées l'une à l'autre sont disposées de façon alignée dans le sens axial.

3. Dispositif selon une des revendications précédentes, **caractérisé en ce que** chaque plaque de serrage (12, 13, 23) présente une ouverture de passage (27) dans laquelle est disposée la tige d'actionnement (25).

4. Dispositif selon la revendication 3, **caractérisé en ce que** l'ouverture de passage (27) est disposée parallèlement à une face supérieure (26) plane formée sur la plaque de serrage (12, 13, 23).

5. Dispositif selon la revendication 3, **caractérisé en ce que** l'ouverture de passage (27) présente une structure d'ancrage (37, 38) à ses deux extrémités.

6. Dispositif selon la revendication 5, **caractérisé en ce que** la structure d'ancrage (37, 38) est un filet femelle (39, 40).

7. Dispositif selon la revendication 5 ou 6, **caractérisé en ce qu'**un moyen formant ressort (42) est disposé et ancré à une extrémité de l'ouverture de passage (27).

8. Dispositif selon la revendication 5 ou 6 ou 7, **caractérisé en ce qu'**un moyen de réglage (43) est disposé et ancré à une extrémité de l'ouverture de passage (27).

9. Dispositif selon la revendication 8, **caractérisé en ce que** le moyen de réglage (43) est une vis.

10. Dispositif selon une des revendications précédentes, **caractérisé en ce que** la tige d'actionnement (25) présente une structure de coin (28, 29) qui est en prise avec au moins un coulisseau (30, 31).

11. Dispositif selon la revendication 10, **caractérisé en ce que** le coulisseau est en prise avec des coulisseaux de serrage (32 - 35) qui sont chacun associés respectivement à l'une des ouvertures (14 - 17) et sont disposés radialement par rapport à celle-ci.

12. Dispositif selon la revendication 11, **caractérisé en ce que** la tige d'actionnement (25), le coulisseau (30, 31) et le coulisseau de serrage (32 - 35) forment un mécanisme démultiplicateur.

13. Dispositif selon la revendication 11 ou 12, **caractérisé en ce que** chaque coulisseau de serrage (32 - 35) est relié à un moyen formant ressort (37, 38) qui est agencé pour mettre le coulisseau sous précontrainte par rapport à l'ouverture (14 - 17), radialement vers l'extérieur.

14. Dispositif selon une des revendications précédentes 11 à 13, **caractérisé en ce que** les coulisseaux (30, 31) et les coulisseaux de serrage (32 - 35) sont disposés dans des rainures qui sont fermées par un ou plusieurs couvercles, sur un côté plat de la plaque de serrage (12, 13, 23).
